(19) Europäisches Patentamt
European Patent Office
Office européen des brevets

(11) EP 3 862 125 A1

(12) **EUROPEAN PATENT APPLICATION**
published in accordance with Art. 153(4) EPC

(43) Date of publication:
**11.08.2021 Bulletin 2021/32**

(21) Application number: **19887415.8**

(22) Date of filing: **16.10.2019**

(51) Int Cl.:
**B23K 11/16** (2006.01)   **B23K 11/11** (2006.01)
**C22C 38/00** (2006.01)   **C22C 38/60** (2006.01)

(86) International application number:
**PCT/JP2019/040746**

(87) International publication number:
**WO 2020/105325 (28.05.2020 Gazette 2020/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.11.2018 JP 2018216801**

(71) Applicant: **Kabushiki Kaisha Kobe Seiko Sho (Kobe Steel, Ltd.)**
**Kobe-shi, Hyogo 651-8585 (JP)**

(72) Inventors:
• **MAEDA, Kyohei**
  **Kanagawa 251-8551 (JP)**
• **SUZUKI, Reiichi**
  **Kanagawa 251-8551 (JP)**

(74) Representative: **Müller-Boré & Partner**
**Patentanwälte PartG mbB**
**Friedenheimer Brücke 21**
**80639 München (DE)**

(54) **JOINED STRUCTURE AND METHOD FOR MANUFACTURING JOINED STRUCTURE**

(57)    Provided are: a joined structure in which HAZ cracking can be suppressed on the outer side of a corona bond, at electrode indentation parts, and on the outer side of indentation parts at the time of spot-welding a plate set including steel plates having a galvanized layer; and a method for manufacturing the joined structure. At least one steel plate among a plurality of steel plates to be subjected to resistance welding is a high-tensile steel plate (11) having a tensile strength of 590 MPa or greater and including a chemical component having a carbon equivalent Ceq of 0.53% or greater. The high-tensile steel plate (11) has a decarburized layer (13) provided either: between a matrix and a zinc-based plating layer (14) formed on a surface on a superposition surface side and/or a surface on a welding electrode side; or on a superposition surface adjacent to a zinc-based plating layer (14) of a zinc-based plating steel plate (21) to be superposed. The decarburized layer (13) has a thickness of from 5 $\mu$m to 200 $\mu$m.

FIG.1C

**Description**

TECHNICAL FIELD

The present invention relates to a joint structure and a method for manufacturing the joint structure.

BACKGROUND ART

In recent years, in order to reduce the weight of a vehicle body and to enhance collision safety for the purpose of reducing the amount of $CO_2$ emissions, a high tensile strength steel (HTSS) sheet has been widely applied to a body frame of an automobile or the like. In addition, spot welding is mainly used in assembly of a vehicle body of an automobile, attachment of components, and the like, and is also applied to welding of a high tensile strength steel sheet.

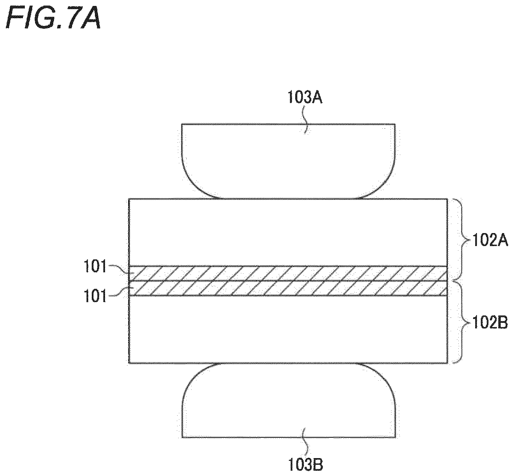

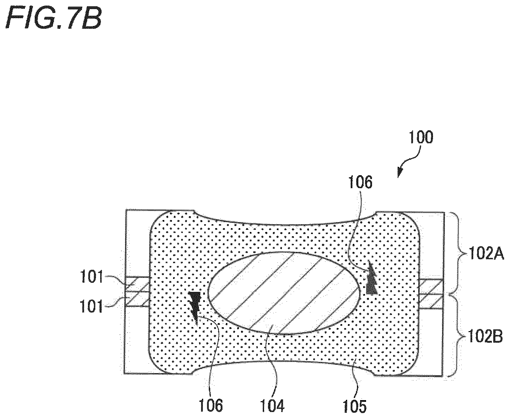

In addition, from the viewpoint of rust prevention, a high tensile strength steel sheet subjected to galvanizing, which has excellent corrosion resistance, is also often used as an automotive steel sheet. FIGS. 7A and 7B show a state where a pair of high tensile strength steel sheets, each of which has been subjected to galvanizing on superposition surfaces thereof, are resistance spot welded. Specifically, a joint structure 100 is formed by sandwiching and pressurizing high tensile strength steel sheets 102A, 102B having a galvanized layer 101 on surfaces thereof by a pair of upper and lower welding electrodes 103A, 103B of a spot welding device, and energizing between the welding electrodes 103A, 103B. In this case, as shown in FIG. 7B, a nugget 104 is formed at a joint portion between the high tensile strength steel sheets 102A, 102B, and a corona bond 105 is formed around the nugget 104.

However, in the high tensile strength steel sheets 102A, 102B, tensile stress acts on a welded portion due to residual stress due to press working during welding or heat shrinkage after welding. For this reason, when molten zinc of the galvanized layer 101 penetrates to a grain boundary of a welded heat affected zone (HAZ) of the high tensile strength steel sheets 102A, 102B on which tensile stress acts, the grain boundary becomes brittle (molten metal brittleness, LME), and HAZ cracks 106 are generated on an outer portion of the corona bond 105, an electrode indentation portion, and an outside of the indentation portion.

Patent Literature 1 discloses a spot welding method for a high strength plated steel sheet in which occurrence of a crack in a welded portion is prevented. That is, it is described that in the spot welding, the occurrence of a crack in a welded portion is prevented by any one of the following methods: (A) setting a holding time after welding to a certain value or more and decreasing a welding energization time within a certain range; (B) performing post-energization under certain conditions after welding energization; (C) setting a holding time after welding to a certain value or more and increasing a pressing force within a certain range after welding energization; and (D) using a high strength plated steel sheet having a certain composition, setting a holding time after welding to a certain value or more, and performing welding.

Patent Literature 2 describes that, in spot welding of a steel sheet in which an superposition surface of a portion to be welded is coated with galvanizing, by setting a holding time after welding in accordance with a total sheet thickness, a crack occurring directly outside a corona bond and at a nugget of the corona bond is prevented, and a high-quality spot welded joint is formed even when a disturbance factor such as an inclination angle, a gap between steel sheets, and misalignment of welding electrodes is present.

Further, Patent Literature 3 discloses a galvanized high tensile strength steel sheet in which coarsening of an austenite crystal grain is prevented by adding steel sheet components such as Ti, Nb, V, Mo, and Zr, and penetration of zinc to a crystal grain boundary can be prevented by forming a dual-phase structure.

CITATION LIST

PATENT LITERATURE

Patent Literature 1: JP-A-2003-103377
Patent Literature 2: JP-A-2017-47475
Patent Literature 3: JP-A-2006-265671

SUMMARY OF INVENTION

TECHNICAL PROBLEM

However, in Patent Literatures 1 and 2, when a total sheet thickness of a sheet set becomes large, a holding time after welding becomes long, and thus a tact time becomes long, which causes an increase in cost. In addition, in Patent Literature 3, special components are required to be added, which may impair securing of mechanical properties and manufacturing stability.

The present invention has been made in view of the above-described problems, and an object thereof is to provide a joint structure capable of preventing a HAZ crack on an outside of a corona bond, an electrode indentation portion, and an outside of the indentation portion when spot welding a sheet set including a steel sheet having a galvanized layer, and a method for manufacturing a joint structure.

SOLUTION TO PROBLEM

The above object of the present invention is achieved by the following configuration (1) related to a joint structure.

(1) A joint structure formed by resistance welding a plurality of superposed steel sheets,
wherein at least one of the plurality of steel sheets is a high tensile strength steel sheet containing a chemical component having a carbon equivalent Ceq of 0.53% or more and having a tensile strength of 590 MPa or higher, the high tensile strength steel sheet has a decarburized layer between a base plate and a galvanized layer formed on at least one of a surface on a superposition surface side of the high tensile strength steel sheet and a surface on a welding electrode side of the high tensile strength steel sheet, or has a decarburized layer on a superposition surface of the high tensile strength steel sheet adjacent to a galvanized layer of a galvanized steel sheet to be superposed,
the decarburized layer has a thickness of 5 $\mu$m or more and 200 $\mu$m or less, and
the carbon equivalent Ceq is a value defined by the following formula (1):

$$Ceq = C + Si/24 + Mn/6 \,...\, (1)$$

wherein C, Si, and Mn each represent a content (mass%) of each element, and when the element is not contained, the content thereof is 0.
In addition, a preferred embodiment of the present invention related to the joint structure relates to the following (2).
(2) The joint structure according to above (1), wherein a nugget diameter $D_1$ of a nugget of the joint structure satisfies a relationship of $D_1 > 3$ mm
In addition, the above object of the present invention is achieved by the following configuration (3) related to a method for manufacturing a joint structure.
(3) A method for manufacturing the joint structure according to above (1) or (2) by resistance spot welding, the method comprising:

superposing a plurality of the high tensile strength steel sheets on one another, or at least one of the high tensile strength steel sheet on the galvanized steel sheet, and
joining the plurality of the high tensile strength steel sheets to one another, or the at least one of the high tensile strength steel sheet to the galvanized steel sheet by resistance spot welding

In addition, a preferred embodiment of the present invention related to a method for manufacturing a joint structure relates to the following (4).
(4) The method for manufacturing the joint structure according to above (3), wherein the resistance spot welding is performed under at least one of the following conditions (a) to (c):

(a) a state where an axial center of the welding electrode is not parallel to a perpendicular line to a surface of the steel sheet in contact with the welding electrode,
(b) a state where there is a gap between the superposition surfaces at a portion to be welded, and
(c) a state where an axial center of one welding electrode and an axial center of the other welding electrode are misaligned with each other.

ADVANTAGEOUS EFFECTS OF INVENTION

According to a joint structure of the present invention, at least one of a plurality of steel sheets to be resistance welded is a high tensile strength steel sheet having tensile strength of 590 MPa or higher and containing a chemical component having a carbon equivalent Ceq of 0.53% or more, the high tensile strength steel sheet has a decarburized layer between a base plate and a galvanized layer formed on at least one of a surface on a superposition surface side of the high tensile strength steel sheet and a surface on a welding electrode side of the high tensile strength steel sheet, or has a decarburized layer on a superposition surface of the high tensile strength steel sheet adjacent to a galvanized layer of a galvanized steel sheet to be superposed, and the decarburized layer has a thickness of 5 $\mu$m or more and 200 $\mu$m or less, so that a HAZ crack on an outside of a corona bond, an electrode indentation portion, and an outside of the indentation portion can be prevented.

In addition, according to a method for manufacturing the joint structure of the present invention, a plurality of high tensile strength steel sheets, or at least one high tensile strength steel sheet and a galvanized steel sheet are superposed on each other, and the plurality of high tensile strength steel sheets, or the at least one high tensile strength steel sheet and the galvanized steel sheet are joined to each other by resistance spot welding, so that a HAZ crack on an outside of a corona bond, an electrode indentation portion, and an outside of the indentation portion can be prevented.

BRIEF DESCRIPTION OF DRAWINGS

[FIG. 1A] FIG. 1A is a schematic cross-sectional view showing a state where a pair of high tensile strength steel sheets each having a decarburized layer and a galvanized layer are superposed on each other before welding according to a first embodiment of the present invention.
[FIG. 1B] FIG. 1B is a schematic cross-sectional view showing a state where the pair of high tensile strength steel sheets in FIG. 1A are resistance welded.
[FIG. 1C] FIG. 1C is a schematic cross-sectional view showing a state where a nugget and a corona bond are formed by resistance welding of the pair of high tensile strength steel sheets in FIG. 1A.
[FIG. 2A] FIG. 2A is a schematic view for illustrating a state where an axial center of a welding electrode and a perpendicular line to a surface of a steel sheet in contact with the welding electrode are not parallel to each other.
[FIG. 2B] FIG. 2B is a schematic view for illustrating a state where there is a gap between superposition surfaces of a portion to be welded.
[FIG. 2C] FIG. 2C is a schematic view for illustrating a state where an axial center of one welding electrode is not on an extension line of an axial center of the other welding electrode.
[FIG. 3A] FIG. 3A is a schematic cross-sectional view showing a state where a high tensile strength steel sheet having a decarburized layer on a superposition surface and a galvanized steel sheet having a galvanized layer on a superposition surface side are resistance welded to each other according to a second embodiment of the present invention.
[FIG. 3B] FIG. 3B is a schematic cross-sectional view showing a state where a nugget and a corona bond are formed by resistance welding the high tensile strength steel sheet and the galvanized steel sheet in FIG. 3A.
[FIG. 4A] FIG. 4A is a schematic cross-sectional view showing a state where a pair of high tensile strength steel sheets each having a decarburized layer and a galvanized layer on a welding electrode side are resistance welded according to a third embodiment of the present invention.
[FIG. 4B] FIG. 4B is a schematic cross-sectional view showing a state where a nugget and a corona bond are formed by resistance welding the pair of high tensile strength steel sheets in FIG. 4A.
[FIG. 5A] FIG. 5A is a schematic cross-sectional view showing a state where three high tensile strength steel sheets having a decarburized layer and a galvanized layer on both surfaces are resistance welded according to a fourth embodiment of the present invention.
[FIG. 5B] FIG. 5B is a schematic cross-sectional view showing a state where a nugget and a corona bond are formed by resistance welding of the three high tensile strength steel sheets in FIG. 5A.

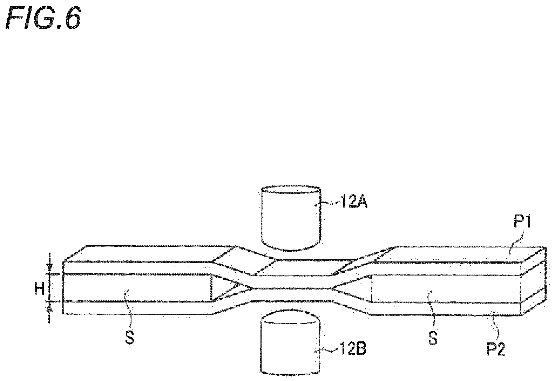

[FIG. 6] FIG. 6 is a perspective view when spot welding is performed with a gap C being provided.
[FIG. 7A] FIG. 7A is a schematic cross-sectional view showing a state where a pair of high tensile strength steel sheets, each of which has been subjected to galvanizing on superposition surfaces thereof, are resistance welded.
[FIG. 7B] FIG. 7B is a schematic cross-sectional view showing a state where HAZ cracks occur in a welded portion in FIG. 7A.

DESCRIPTION OF EMBODIMENTS

Hereinafter, a joint structure according to each embodiment of the present invention and a method for manufacturing the same will be described in detail with reference to the drawings.

(First Embodiment)

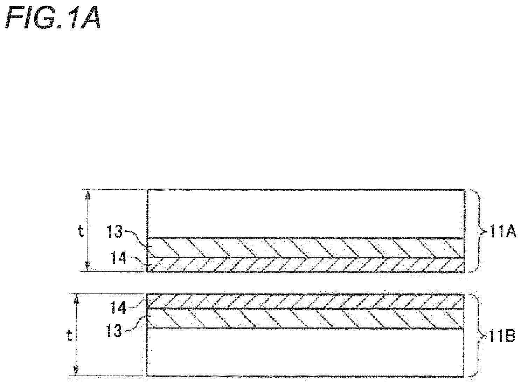

As shown in FIG. 1A, a joint structure 10 according to a first embodiment is formed by resistance welding (resistance spot welding) a plurality of (two in the embodiment shown in FIG. 1A) high tensile strength steel sheets 11 (11A, 11B) each having a decarburized layer 13 and a galvanized layer 14.

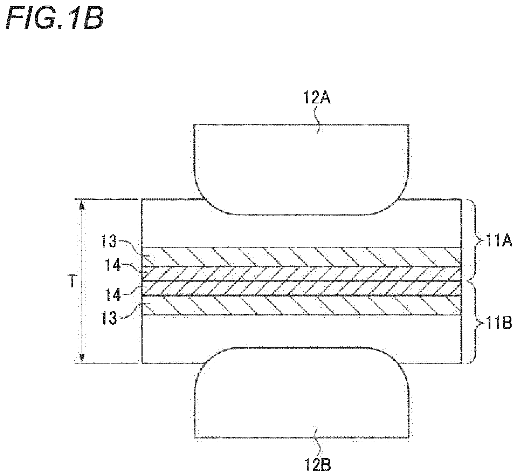

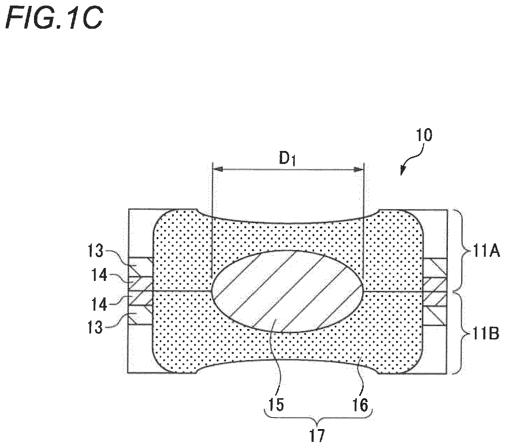

Specifically, as shown in FIG. 1B, the two superposed high tensile strength steel sheets 11A, 11B are sandwiched and pressurized by a pair of upper and lower welding electrodes 12A, 12B of a spot welding device, and the welding electrodes 12A, 12B are energized, whereby a contact portion of the high tensile strength steel sheets 11A, 11B is melted to form a joint portion 17. As a result, as shown in FIG. 1C, a nugget 15 is formed at the joint portion 17 between the high tensile strength steel sheets 11A, 11B, and a corona bond 16 is formed around the nugget 15.

Here, in the high tensile strength steel sheets 11A, 11B according to the present embodiment, the decarburized layer 13 is provided between the galvanized layer 14 and a base plate. Since an A3-point is higher than that of the base plate, and the decarburized layer 13 that is less likely to undergo austenite transformation (reverse transformation) is present, a HAZ surface layer is less likely to have a coarse austenite structure during welding. As a result, embrittlement due to zinc, in which molten zinc of the galvanized layer 14 is dispersed and penetrates to a crystal grain boundary of a HAZ during welding, is prevented. That is, by forming the decarburized layer 13 between the base plate and the galvanized layer 14 of the high tensile strength steel sheets 11A, 11B, a crack can be prevented even when tensile stress acts in presence of molten zinc.

Hereinafter, the high tensile strength steel sheet 11 used in the joint structure 10 according to the present embodiment will be described.

The high tensile strength steel sheet 11 contains a chemical component having a carbon equivalent Ceq of 0.53% or more, and has a tensile strength of 590 MPa or more.

It is noted that the carbon equivalent Ceq is a value defined by the following formula (1).

$$Ceq = C + Si/24 + Mn/6 \ldots (1)$$

wherein C, Si, and Mn each represent a content (mass%) of each element, and when the element is not contained, the content thereof is 0.

Since the high tensile strength steel sheet 11 contains the chemical component having a carbon equivalent Ceq of 0.53% or more, an excellent balance between strength and elongation can be obtained. The carbon equivalent Ceq is preferably 0.6% or more, and more preferably 0.7% or more.

The high tensile strength steel sheet 11 is not particularly limited as long as the high tensile strength steel sheet has tensile strength of 590 MPa or higher, and may be, for example, a high tensile strength steel sheet having tensile strength of 780 MPa or higher, or 980 MPa or higher.

The high tensile strength steel sheet 11 preferably contains the following chemical components: C of 0.05 mass% to 0.60 mass%, Si of 0.01 mass% to 3.0 mass%, Mn of 0.5 mass% to 5.0 mass%, P of 0.05 mass% or less (not including 0 mass%), and S of 0.05 mass% or less (not including 0 mass%) in the following points. A desirable range of content of each element (C, Si, Mn, P, S, and other metal elements) contained in steel and a reason for limiting the range will be described below. It is noted that a % indication of the content of each element is all mass%. In addition, "-" means that a value is equal to or more than a lower limit value and equal to or less than an upper limit value.

[C: 0.05% ~ 0.60%]

C is an element that contributes to improvement in base plate strength of steel, and is therefore an essential element for a high tensile strength steel sheet. Therefore, a lower limit of C content is preferably 0.05% or more. On the other hand, when C is added excessively, a hardness of a HAZ is increased, so that occurrence of a crack cannot be prevented. Therefore, an upper limit of the C content is preferably 0.60% or less, more preferably 0.40% or less, and still more preferably 0.20%.

[Si: 0.01% ~ 3.0%]

Si is an element that contributes to deoxidation. Therefore, a lower limit of Si content is preferably 0.01% or more. On the other hand, when Si is added excessively, temper softening resistance is increased, and the hardness of a HAZ is increased, so that the occurrence of a crack cannot be prevented. Therefore, an upper limit of the Si content is preferably 3.00% or less, more preferably 2.00% or less, and still more preferably 1.00% or less.

[Mn: 0.5% ~ 5.0%]

Mn is an element that contributes to improvement of hardenability, and is an essential element for forming a hard structure such as martensite. Therefore, a lower limit of Mn content is preferably 0.5% or more. On the other hand, when C is added excessively, the hardness of a HAZ is increased, so that the occurrence of a crack cannot be prevented. Therefore, an upper limit of the Mn content is preferably 5.0% or less, more preferably 2.5% or less, and still more preferably 2.0% or less.

[P: 0.05% or less (not including 0%)]

P is an element inevitably mixed into steel, is likely to segregate into a grain and a grain boundary, so that toughness of a HAZ is reduced and the occurrence of a crack cannot be prevented. Therefore, an upper limit of P content is preferably 0.05% or less, more preferably 0.04% or less, and still more preferably 0.02% or less.

[S: 0.05% or less (not including 0%)]

Similar to P, S is an element inevitably mixed into steel, is likely to segregate into a grain and a grain boundary, so that the toughness of a HAZ is reduced and the occurrence of a crack cannot be prevented. Therefore, an upper limit of S content is preferably 0.05% or less, more preferably 0.04% or less, and still more preferably 0.02% or less.

[Other Metal Elements]

Except for C, Si, Mn, P, and S, it is preferable that A1 is 1.0% or less (including 0%), N is 0.01% or less (including 0%), a total of Ti, V, Nb, and Zr is 0.1% or less (including 0%), a total of Cu, Ni, Cr, and Mo is 2.0% or less (including 0%), B is 0.01% or less (including 0%), and a total of Mg, Ca and REM is 0.01% or less (including 0%). In addition, a balance is preferably Fe and an inevitable impurity. The inevitable impurity is an impurity that is inevitably mixed at the time of manufacturing steel, and may be contained within a range that does not impair various properties of steel.

On the other hand, the decarburized layer 13 is formed by decarburizing a surface of the base plate of the high tensile strength steel sheet 11 before the galvanized layer 14 is formed. A thickness of the decarburized layer is determined by, for example, measuring a thickness of a layer containing ferrite, which is a main layer, using an optical microscope, an electron microscope, or the like for a sample immediately after decarburization treatment.

In order to effectively exhibit an effect of preventing a crack by forming the decarburized layer 13, the thickness of the decarburized layer 13 is set to 5 $\mu$m or more, preferably 20 $\mu$m or more, more preferably 30 $\mu$m or more, still more preferably 45 $\mu$m or more, and even more preferably 50 $\mu$m or more. However, when the decarburized layer 13 becomes excessively thick, the tensile strength and fatigue strength are decreased. Therefore, the thickness of the decarburized layer 13 is set to 200 $\mu$m or less, preferably 160 $\mu$m or less, more preferably 120 $\mu$m or less, and still more preferably 80 $\mu$m or less.

A structure of the decarburized layer 13 contains at least one of ferrite, bainite, and martensite. The softer the structure, the more difficult the decarburized layer is to crack. Therefore, it is more preferable that the decarburized layer 13 has a structure containing ferrite and containing any one of bainite and martensite, and even more preferable that the decarburized layer 13 has a structure containing ferrite and not containing bainite and martensite.

In the present embodiment, the resistance spot welding is performed in a state where the galvanized layers 14 of the high tensile strength steel sheets 11A, 11B are superposed on each other so as to face each other, and welding is performed in an environment where a disturbance as described below exists.

(Inclination Angle θ)

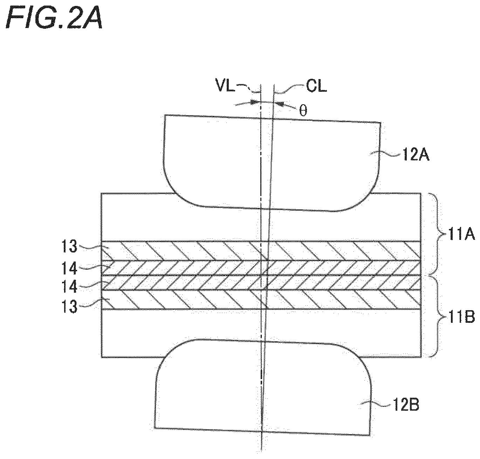

In spot welding, the welding electrodes are usually perpendicularly applied to surfaces of the steel sheets 11A, 11B, but the spot welding may be performed in a state where an axial center CL of the welding electrodes 12A, 12B and a perpendicular line VL to the surfaces of the steel sheets 11A, 11B are not parallel to each other. As shown in FIG. 2A, an angle formed by the axial center CL of the welding electrodes 12A, 12B and the perpendicular line VL to the surfaces of the steel sheets 11A, 11B is defined as an inclination angle θ. Although an upper limit of the inclination angle θ is not particularly set, when the inclination angle θ is 10 degrees or less, the HAZ crack can be prevented by applying the present embodiment even when the steel sheets 11A, 11B are deformed and a portion where stress is relatively high is generated in the vicinity of the corona bond 16.

(Gap C)

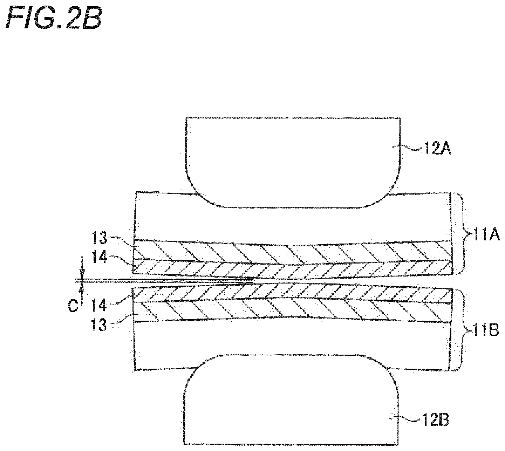

As shown in FIG. 2B, a gap C is a gap between the superposition surfaces at the portion to be welded, and spot welding may be performed with a gap between the steel sheets 11A, 11B due to a partial protuberance or the like around the portion to be welded of the steel sheet 11. Although an upper limit of the gap C is not particularly set, when the gap C is 3 mm or less, the HAZ crack can be prevented by applying the present embodiment even when local deformation is observed in the portion to be welded of the steel sheet 11, and local stress is generated in the vicinity of the corona bond 16.

(Misalignment d)

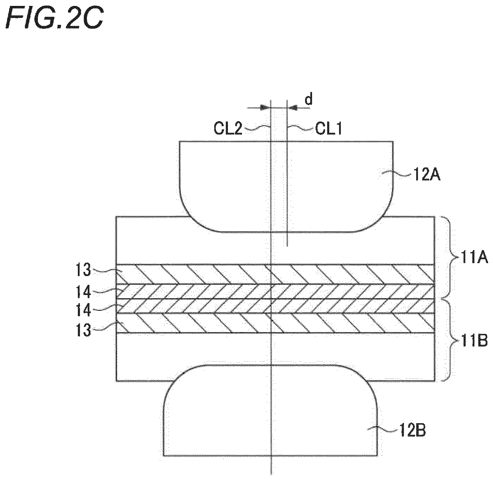

As shown in FIG. 2C, misalignment d is a case where spot welding is performed with an axial center CL1 of one welding electrode 12A and an axial center CL2 of the other welding electrode 12B misaligned, and refers to an amount of the misalignment between the axial center CL1 of one welding electrode 12A and the axial center CL2 of the other welding electrode 12B. Although an upper limit of the misalignment d is not particularly set, when the misalignment d is 2 mm or less, the HAZ crack can be prevented by applying the present embodiment even when the steel sheet 11 is deformed and stress is generated in the vicinity of the corona bond 16.

In particular, according to a method for manufacturing a joint structure according to the present embodiment, the HAZ crack can be prevented even when two or more conditions of the inclination angle $\theta$ of 10 degrees or less, the gap C of 3 mm or less, and the misalignment d of 2 mm or less are satisfied.

Welding conditions in the resistance spot welding are not particularly limited, and energization and a pressurization pattern may be appropriately determined according to design conditions such as required strength and rigidity. For example, in the case of spot welding, a two-stage energization condition in which an applied current value is changed in two stages, a pulse energization condition in which a pulse current is applied, or the like may be used. In this case, an amount of energy to be applied to the nugget 15 can be set with high accuracy, and a temperature, a size, or the like of the nugget 15 can be set finely. In addition, tempering energization and down slope can be appropriately applied because it is possible to further prevent the HAZ crack.

In order to form the satisfactory nugget 15 without a crack, a total sheet thickness T of the high tensile strength steel sheets 11A, 11B is preferably 1.5 mm or more and 6 mm or less. By setting the total sheet thickness T within this range, the HAZ crack at an outside of the corona bond, an electrode indentation portion, and an outside of the indentation portion can be prevented.

Further, as shown in FIG. 1C, when a diameter $D_1$ of the nugget 15 is increased, the nugget 15 grows in a sheet thickness direction, and a temperature of the electrode is increased, so that copper derived from the electrode and zinc derived from galvanizing form an alloy layer. Copper is also an element which makes embrittlement similar to zinc. When an alloy layer of copper and zinc is excessively formed, an amount of copper entering a crystal grain boundary of the HAZ is increased, making it difficult to prevent a crack. Therefore, an upper limit of the diameter $D_1$ of the nugget is preferably $7 \times \sqrt{t}$ or less.

In addition, when the diameter $D_1$ of the nugget is too small, in particular, when there is a disturbance factor, excessive stress concentration tends to occur in the vicinity of the nugget, which causes a crack after welding. Therefore, the diameter $D_1$ of the nugget is preferably $2 \times \sqrt{t}$ or more, where t is a sheet thickness of a thinner one of the steel sheets 11 to be joined. From the same viewpoint as described above, the diameter $D_1$ of the nugget preferably satisfies a relationship of $D_1 > 3$ mm, more preferably satisfies a relationship of $D_1 > 5$ mm, and still more preferably satisfies a relationship of $D_1 > 7$ mm.

As described above, according to the joint structure 10 of the present embodiment, at least one of the plurality of steel sheets to be resistance welded is the high tensile strength steel sheet 11 having tensile strength of 590 MPa or higher and containing a chemical component having a carbon equivalent Ceq of 0.53% or more. The high tensile strength steel sheet 11 has the decarburized layer 13 between the base plate and the galvanized layer 14 formed on the surface on the superposition surface side. The decarburized layer 13 has a thickness of 5 $\mu$m or more and 200 $\mu$m or less. This makes it possible to prevent the HAZ crack at the outside of the corona bond 16, the electrode indentation portion, and the outside of the indentation portion.

In addition, according to the method for manufacturing the joint structure according to the present embodiment, since the plurality of high tensile strength steel sheets 11A, 11B are superposed on each other and the plurality of high tensile strength steel sheets 11A, 11B are joined to each other by resistance spot welding, the HAZ crack on the outside of the corona bond, the electrode indentation portion, and the outside of the indentation portion can be prevented.

Further, according to the method for manufacturing the joint structure of the present embodiment, even when the resistance spot welding is performed under at least one of the following conditions (a) to (c), the HAZ crack can be prevented.

(a) A state where the axial center CL of the welding electrodes 12A, 12B is not parallel to the perpendicular line VL to the surface of the steel sheet 11 in contact with the welding electrodes 12A, 12B.
(b) A state where there is the gap C between the superposition surfaces at a portion to be welded.
(c) A state where the axial center CL1 of one welding electrode 12A and the axial center CL2 of the other welding electrode 12B are misaligned with each other.

(Second Embodiment)

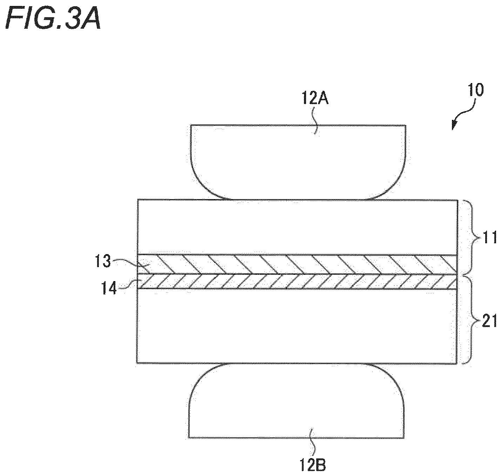

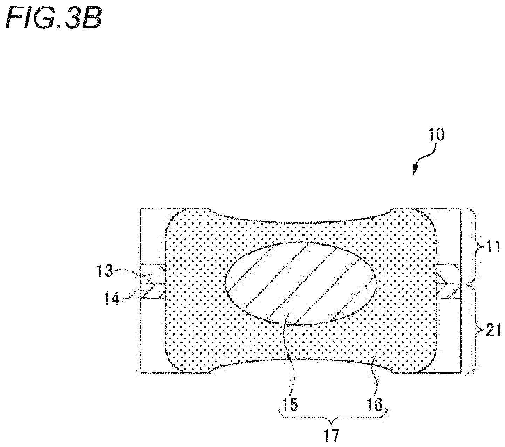

Next, a joint structure according to a second embodiment will be described with reference to FIGS. 3A and 3B. A joint structure 10 according to the second embodiment is different from the joint structure 10 according to the first embodiment in that the joint structure 10 according to the second embodiment is a sheet set of the high tensile strength steel sheet 11 and a galvanized steel sheet 21.

As shown in FIGS. 3A and 3B, in the joint structure 10 according to the present embodiment, the high tensile strength steel sheet 11 having the decarburized layer 13 on a surface on a superposition surface side and the galvanized steel sheet 21 having the galvanized layer 14 on a surface on a superposition surface side are resistance welded. That is, the decarburized layer 13 of the high tensile strength steel sheet 11 is formed on a superposition surface adjacent to the galvanized layer 14 of the galvanized steel sheet 21 to be superposed.

A base plate of the galvanized steel sheet 21 is not particularly limited, and may be steel having tensile strength of 590 MPa or less, or may be mild steel.

In the joint structure 10, since the decarburized layer 13 is interposed between the base plate of the high tensile strength steel sheet 11 and the galvanized layer 14 of the galvanized steel sheet 21, molten zinc of the galvanized layer 14 does not easily penetrate to a crystal grain boundary of a HAZ of the high tensile strength steel sheet 11, and a HAZ crack due to grain boundary embrittlement is prevented.

Other configurations and operations are the same as those of the joint structure 10 according to the first embodiment.

(Third Embodiment)

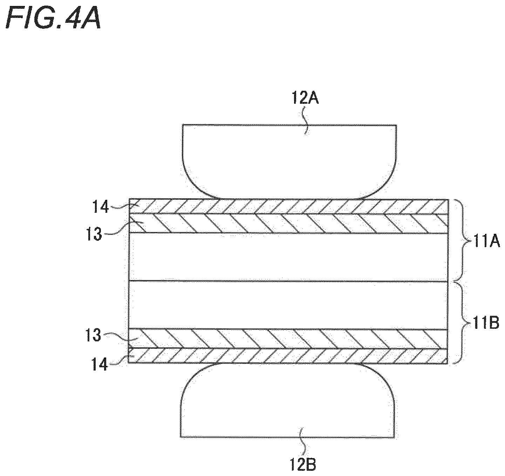

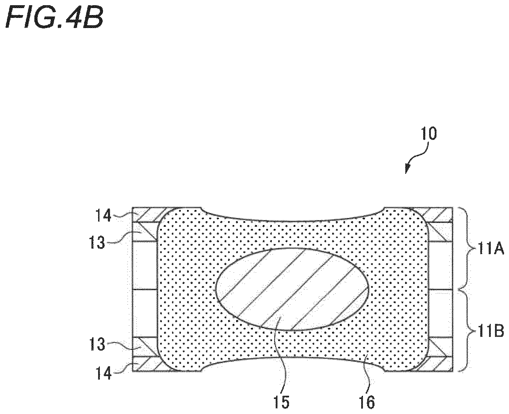

Next, a joint structure according to a third embodiment will be described with reference to FIGS. 4A and 4B. A joint structure 10 according to the third embodiment is different from the joint structure 10 according to the first embodiment in that the decarburized layer 13 and the galvanized layer 14 of the high tensile strength steel sheets 11A, 11B are disposed on welding electrodes 12A, 12B sides. On a superposition surface side of the high tensile strength steel sheets 11A, 11B, base plates having no galvanized layer 14 are in contact with each other.

As shown in FIGS. 4A and 4B, in the joint structure 10, since the decarburized layer 13 is interposed between a base plate and the galvanized layer 14 of the high tensile strength steel sheets 11A, 11B on the welding electrodes 12A, 12B side, molten zinc of the galvanized layer 14 does not penetrate to a crystal grain boundary of a HAZ of the high tensile strength steel sheets 11A, 11B, and a HAZ crack due to grain boundary embrittlement is prevented. In addition, since the base plates having no galvanized layer 14 are in contact with each other on the superposition surface side, there is no influence of molten zinc, and the HAZ crack does not occur.

Other configurations and operations are the same as those of the joint structure 10 according to the first embodiment.

(Fourth Embodiment)

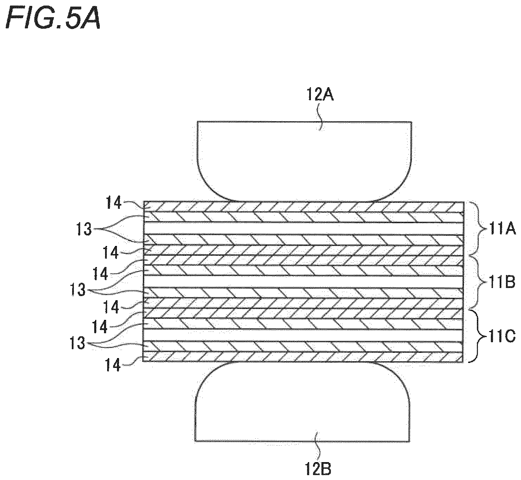

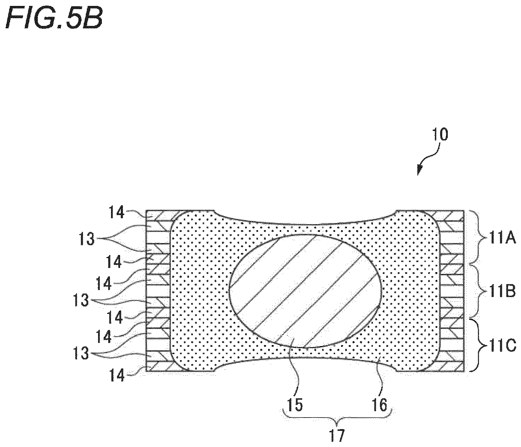

Next, a joint structure according to a fourth embodiment will be described with reference to FIGS. 5A and 5B. In a joint structure 10 according to the fourth embodiment, three high tensile strength steel sheets 11A, 11B, and 11C having the decarburized layer 13 and the galvanized layer 14 on both surfaces thereof are superposed and spot welded.

As shown in FIGS. 5A and 5B, in the joint structure 10, since the decarburized layer 13 is interposed between a base plate and the galvanized layer 14 of the high tensile strength steel sheets 11A, 11B, and 11C on both a welding electrodes 12A, 12B side and a superposition surface side, molten zinc of the galvanized layer 14 does not penetrate to a crystal grain boundaries of a HAZ of the high tensile strength steel sheets 11A, 11B, and 11C, and a HAZ crack due to grain boundary embrittlement is prevented.

Other configurations and operations are the same as those of the joint structure 10 according to the first embodiment.

[Example]

In order to confirm the effects of the present invention, in the following Examples and Comparative Examples, two steel sheets 11 of Samples A1 to A3, B1 to B3, C1 to C2, and D1 to D2 shown in Table 1 were superposed and used, and presence or absence of a crack was confirmed after welding under the following welding conditions and disturbance conditions. In Table 1, "GA steel sheet" refers to a galvannealed steel sheet, and "EG steel sheet" refers to an electrogalvanized steel sheet.

[Table 1]

| Sample No. | Steel | Sheet thickness t [mm] | Tensile strength (base plate strength) [MPa] | Carbon amount [%] | Ceq(Note 1) [%] | Thickness of decarburized layer (ferrite layer) [μm] |
|---|---|---|---|---|---|---|
| A1 | GA steel sheet | 1.4 | 980 | 0.09 | 0.53 | 0 |
| A2 | | | 780 | | | 23 |
| A3 | | | 780 | | | 46 |
| B1 | GA steel sheet | 1.4 | 980 | 0.20 | 0.63 | 0 |
| B2 | | | 1180 | | | 11 |
| B3 | | | 980 | | | 37 |
| C1 | GA steel sheet | 1.2 | 1370 | 0.19 | 0.71 | 0 |
| C2 | | | 1470 | | | 34 |
| D1 | EG steel sheet | 1.6 | 590 | 0.43 | 0.57 | 0 |
| D2 | | | 590 | | | 47 |
| (Note 1) Ceq = C+Si/24+Mn/6 (C, Si, and Mn each represent a content (mass%) of each element.) | | | | | | |

(Welding Conditions)

A welding machine was a servo pressurization direct current inverter, and both the upper and lower welding electrodes were dome radius type (DR welding electrode) chromium copper electrodes having a tip diameter of 6 mm (tip R40 mm). An amount of cooling water flowing through the welding electrode was 1.5 L/min both upper and lower. Hereinafter, other welding conditions will be described.

Pressure: 500 kgf
Current value: 7 kA to 10 kA
Energization time: 0.4 sec
Hold time: 0.2 sec

(Disturbance Conditions)

As disturbance conditions, an inclination angle θ was set to 3 degrees to 5 degrees in all Examples and Comparative Examples. The inclination angle θ was set by inclining the welding electrodes 12A, 12B by a predetermined angle from a state where the axial center CL of the welding electrodes 12A, 12B and the perpendicular line VL to a welding surface coincide with each other.

(Confirmation of Presence or Absence of Crack)

The joint structure 10 after welding was examined for presence or absence of a crack by an X-ray radiographic test and cross section macro observation. A cross-sectional macro observation position was a center of a nugget, and an observation plane was a plane parallel to a longitudinal direction. When a crack was confirmed, no etching was performed, and when a diameter of a nugget was measured, etching was performed with a picric acid saturated aqueous solution.

Evaluation results of the test are shown in Table 2, together with a combination of the steel sheets 11, a depth (thickness) of the decarburized layer 13, and welding conditions.

[Table 2]

| | First member (upper sheet) | | Second member (lower sheet) | | Current value [kA] | Diameter $D_1$ of nugget [mm] | Presence or absence of crack |
|---|---|---|---|---|---|---|---|
| | Sample No. | Thickness of decarburized layer [μm] | Sample No. | Thickness of decarburized layer [μm] | | | |
| Example 1 | A2 | 23 | A2 | 23 | 7.0 | 6.34 | No |
| Example 2 | | | | | 7.5 | 6.97 | No |
| Example 3 | | | | | 8.0 | 7.35 | No |
| Example 4 | | | | | 8.5 | 7.97 | No |
| Example 5 | A3 | 46 | A3 | 46 | 7.0 | 6.32 | No |
| Example 6 | | | | | 7.5 | 7.03 | No |
| Example 7 | | | | | 8.0 | 7.34 | No |
| Comparative Example 1 | A1 | 0 | A1 | 0 | 7.0 | 6.61 | Yes |
| Comparative Example 2 | | | | | 7.5 | 7.18 | Yes |
| Comparative Example 3 | | | | | 8.0 | 7.32 | Yes |
| Example 8 | B2 | 11 | B2 | 11 | 7.0 | 6.56 | No |
| Example 9 | | | | | 7.5 | 7.08 | No |
| Example 10 | | | | | 8.0 | 7.82 | No |
| Example 11 | B3 | 37 | B3 | 37 | 7.0 | 6.66 | No |
| Example 12 | | | | | 7.5 | 7.15 | No |
| Example 13 | | | | | 8.0 | 7.74 | No |
| Comparative Example 4 | B1 | 0 | B1 | 0 | 7.0 | 6.69 | Yes |
| Comparative Example 5 | | | | | 7.5 | 7.34 | Yes |
| Example 14 | C2 | 34 | C2 | 34 | 7.0 | 6.42 | No |
| Example 15 | | | | | 8.0 | 7.13 | No |
| Comparative Example 6 | C1 | 0 | C1 | 0 | 7.0 | 5.97 | Yes |
| Comparative Example 7 | | | | | 8.0 | 7.21 | Yes |
| Example 16 | D2 | 47 | D2 | 47 | 8.0 | 3.08 | No |
| Example 17 | | | | | 9.0 | 5.29 | No |
| Example 18 | | | | | 10.0 | 6.90 | No |
| Comparative Example 8 | D1 | 0 | D1 | 0 | 8.0 | 4.68 | Yes |
| Comparative Example 9 | | | | | 9.0 | 6.58 | Yes |
| Comparative Example 10 | | | | | 10.0 | 7.82 | Yes |

As shown in Table 2, in any of Examples in which steel sheets having decarburized layers were welded to each other, it was confirmed that there was no crack, and a good joined structure was obtained. On the other hand, in any of Comparative Examples in which steel sheets having no decarburized layer 13 were welded to each other, it was confirmed that there was a crack, and a good joined structure was not obtained.

The present invention is not limited to the embodiments described above, and modifications, improvements, or the like can be made as appropriate.

Although the embodiments are described above with reference to the drawings, it is needless to say that the present invention is not limited to such examples. It will be apparent to those skilled in the art that various changes and modifications may be conceived within the scope of the claims. It is also understood that the various changes and modifications belong to the technical scope of the present invention. Constituent elements in the embodiments described above may be combined freely within a range not departing from the spirit of the present invention.

The present application is based on Japanese Patent Application (Japanese Patent Application No. 2018-216801) filed on November 19, 2018, and contents thereof are incorporated herein by reference.

REFERENCE SIGNS LIST

    10 Joint structure
    11, 11A, 11B, 11C High tensile strength steel sheet (steel sheet)
    12A, 12B Welding electrode
    13 Dearburized layer
    14 Galvanized Layer
    21 Galvanized steel sheet (steel sheet)
    CL Axial center of welding electrode
    CL1 Axial center of one welding electrode
    CL2 Axial center of the other welding electrode
    VL Perpendicular line to surface of steel sheet
    C Gap
    $D_1$ Diameter of nugget
    d Misalignment
    $\theta$ Inclination angle

## Claims

1. A joint structure formed by resistance welding a plurality of superposed steel sheets, wherein at least one of the plurality of steel sheets is a high tensile strength steel sheet containing a chemical component having a carbon equivalent Ceq of 0.53% or more and having a tensile strength of 590 MPa or higher, the high tensile strength steel sheet has a decarburized layer between a base plate and a galvanized layer formed on at least one of a surface on a superposition surface side of the high tensile strength steel sheet and a surface on a welding electrode side of the high tensile strength steel sheet, or has a decarburized layer on a superposition surface of the high tensile strength steel sheet adjacent to a galvanized layer of a galvanized steel sheet to be superposed, the decarburized layer has a thickness of 5 $\mu$m or more and 200 $\mu$m or less, and the carbon equivalent Ceq is a value defined by the following formula (1):

$$Ceq = C + Si/24 + Mn/6 \dots (1)$$

   wherein C, Si, and Mn each represent a content (mass%) of each element, and when the element is not contained, the content thereof is 0.

2. The joint structure according to claim 1, wherein a nugget diameter $D_1$ of a nugget of the joint structure satisfies a relationship of $D_1 > 3$ mm.

3. A method for manufacturing the joint structure according to claim 1 or 2 by resistance spot welding, the method comprising:

superposing a plurality of the high tensile strength steel sheets on one another, or at least one of the high tensile strength steel sheet on the galvanized steel sheet, and

joining the plurality of the high tensile strength steel sheets to one another, or the at least one of the high tensile strength steel sheet to the galvanized steel sheet by resistance spot welding.

4. The method for manufacturing the joint structure according to claim 3, wherein the resistance spot welding is performed under at least one of the following conditions (a) to (c):

(a) a state where an axial center of the welding electrode is not parallel to a perpendicular line to a surface of the steel sheet in contact with the welding electrode,
(b) a state where there is a gap between the superposition surfaces at a portion to be welded, and
(c) a state where an axial center of one welding electrode and an axial center of the other welding electrode are misaligned with each other.

# FIG.1A

FIG.1B

# FIG.1C

# FIG.2A

FIG.2B

## FIG.2C

FIG.3A

FIG.3B

FIG.4A

FIG.4B

FIG.5A

FIG.5B

FIG.6

*FIG.7A*

103A

101

101

102A

102B

103B

FIG.7B

## INTERNATIONAL SEARCH REPORT

International application No.

PCT/JP2019/040746

A. CLASSIFICATION OF SUBJECT MATTER
Int.Cl. B23K11/16(2006.01)i, B23K11/11(2006.01)i, C22C38/00(2006.01)i,
C22C38/60(2006.01)i

According to International Patent Classification (IPC) or to both national classification and IPC

B. FIELDS SEARCHED

Minimum documentation searched (classification system followed by classification symbols)
Int.Cl. B23K11/16, B23K11/11, C22C38/00, C22C38/60

Documentation searched other than minimum documentation to the extent that such documents are included in the fields searched
Published examined utility model applications of Japan    1922–1996
Published unexamined utility model applications of Japan  1971–2019
Registered utility model specifications of Japan          1996–2019
Published registered utility model applications of Japan  1994–2019

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2017-74597 A (TOYOTA MOTOR CORPORATION) 20 April 2017, entire text, all drawings (Family: none) | 1–4 |
| A | JP 49-125251 A (NISSHIN STEEL CO., LTD.) 30 November 1974, entire text, all drawings (Family: none) | 1–4 |
| A | JP 2008-106324 A (NIPPON STEEL CORPORATION) 08 May 2008, entire text, all drawings (Family: none) | 1–4 |

☐ Further documents are listed in the continuation of Box C.    ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 28.11.2019 | 10.12.2019 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003103377 A
- JP 2017047475 A
- JP 2006265671 A
- JP 2018216801 A